# EUROPEAN PATENT APPLICATION

(11) **EP 4 456 299 A1**
(43) Date of publication of application: **30.10.2024**
(21) Application number: 22921433.3
(22) Date of filing: 06.07.2022
(51) Int. Cl.: H01M 50/289

(54) **BATTERY PACK**

(30) Priority: 24.01.2022 CN 202220191014 U
(71) Applicant: Eve Energy Co., Ltd., Huizhou, Guangdong 516006 (CN)
(72) Inventor: LI, Xiaokang, Huizhou, Guangdong 516006 (CN); WU, Liesong, Huizhou, Guangdong 516006 (CN)
(74) Representative: Herrero & Asociados, S.L.
(86) International application number: PCT/CN2022/104200
(87) International publication number: WO 2023/138002

(57) **Abstract**

The present disclosure relates to a battery pack, including multiple battery modules and a first fixing assembly. The multiple battery modules form a battery module group. The first fixing assembly includes multiple socket members and a first fixing beam that is disposed on each of opposite sides of the battery module group; the ends of the first fixing beams are correspondingly connected through a first connector or a second connector. Each battery module defines at least one first socket hole, and the first fixing beam defines at least one second socket hole, the at least one second socket hole corresponding to and facing the at least one first socket hole one by one. Each socket member is inserted in a corresponding first socket hole and a corresponding second socket hole.

## Description

The present disclosure claims priority of Chinese Patent Application No. 202220191014.6, filed on, January 2022, the entire contents of which are hereby incorporated by reference in their entirety.

### TECHNICAL FIELD

The present disclosure relates to technical field of batteries, and in particular to a battery pack.

### BACKGROUND

With requirements from the electronic and electrical products on the capacity and voltage of batteries being consistently increasing, the capacity and voltage of a single battery can no longer meet the requirements, and a battery pack come into being.

Battery packs are mainly divided into two kinds. One kind is more than one cylindrical single cell connected in series or parallel to form a power source; however, the cylindrical single cell has lower capacity, and when the battery pack requires a larger amount of energy, the number of cylindrical single cells required is greater, such that the production efficiency is low and the production cost is high. The other kind is more than one square single cells connected in series or parallel to form a power source; the capacity of the square single cell is higher compared to the cylindrical single cell, such that the number of square monobloc batteries required in the battery pack will be relatively less, and thus the production cost is lower; however, in order to facilitate the later maintenance of this type of battery pack, it is necessary to assemble the monobloc batteries into a battery module and then assemble multiple battery modules into a battery pack through fixing assemblies. In the related art, the battery pack is formed by installing a snap-holder at the front and rear ends of each of the battery modules, installing a mounting plate in the snap-holder, and then connecting and fixing through bolt assemblies. However, the stability of the fixing structure of the battery pack is relatively poor, and the efficiency of assembling and disassembling the battery pack is low.

### SUMMARY OF THE DISCLOSURE

Embodiments of the present disclosure provide a battery pack with a simple structure, high assembly efficiency, and good stability.

The present disclosure provides a battery pack, including: a plurality of battery modules and a first fixing assembly; wherein each adjacent two of the plurality of battery modules are electrically connected through a first connecting piece; the plurality of battery modules form a battery module group; the first fixing assembly includes a plurality of socket members and a first fixing beam that is disposed on each of opposite sides of the battery module group; an end of the first fixing beam on one of the opposites sides of the battery module group and an end of the first fixing beam on the other of the opposites sides of the battery module group are connected through a first connector, the end of the first fixing beam on the one of the opposites sides of the battery module group and the end of the first fixing beam on the other of the opposites sides of the battery module group facing each other; the other end of the first fixing beam on the one of the opposites sides of the battery module group and the other end of the first fixing beam on the other of the opposites sides of the battery module group are connected through a second connector, the other end of the first fixing beam on the one of the opposites sides of the battery module group and the other end of the first fixing beam on the other of the opposites sides of the battery module group facing each other; each battery module defines at least one first socket hole, and the first fixing beam defines at least one second socket hole, the at least one second socket hole corresponding to and facing the at least one first socket hole one by one; each of the plurality of socket members is inserted in a corresponding first socket hole and a corresponding second socket hole.

### BRIEF DESCRIPTION OF THE DRAWINGS

The present disclosure is described below in accordance with the accompanying drawings and embodiments.
FIG. 1 is a schematic view of a disassembled battery pack according to some embodiments of the present disclosure.
FIG. 2 is a partially enlarged view at A of FIG. 1.
FIG. 3 is a partially enlarged view at B of FIG. 1.
FIG. 4 is a partially enlarged view at C of FIG. 1.
FIG. 5 is a partial schematic view of a battery pack according to some embodiments of the present disclosure.
FIG. 6 is a partially enlarged view at D of FIG. 5.
FIG. 7 is a structural schematic view of a socket member according to some embodiments of the present disclosure.
FIG. 8 is a structural schematic view of a battery module according to some embodiments of the present disclosure.
FIG. 9 is a partially enlarged view at E of FIG. 8.
FIG. 10 is a schematic view of a disassembled battery module according to some embodiments of the present disclosure.
FIG. 11 is a structural schematic view of a fixing plate according to some embodiments of the present disclosure.
FIG. 12 is a structural schematic view of a battery unit according to some embodiments of the present disclosure.

### Reference numerals:

1, battery module; 11, battery unit; 111, single cell; 2, first fixing assembly; 21, socket member; 211, socket body; 212, fixing portion; 213, first fastener; 214, first threaded hole; 22, first fixing beam; 221, second socket hole; 222, first fixing hole; 223, positioning groove; 224, first limiting groove; 225, second limiting groove; 23, first connector; 231, first limit block; 24, second connector; 241, second limit block; 242, tab; 25, second fastener; 26, second fixing beam; 261, third fixing hole; 27, third fastener; 3, second fixing assembly; 31, first clamping plate; 311, fourth fixing hole; 312, mounting groove; 313, third limiting groove; 32, fixing plate; 321, first socket hole; 322, second fixing hole; 323, first plate body; 324, second plate body; 325, third plate body; 33, insulating cover; 34, rubber strip; 35, limit plate; 36, screw; 37, equalization slave; 38, terminal block; 39, insulating sheet; 4, third fixing assembly; 41, second clamping plate; 411, fifth fixing hole; 42, steel strip; 5, mortise-and-tenon structure; 51, first tenon; 52, first mortise slot; 53, second tenon; 54, second mortise slot; 55, third tenon; 56, third mortise slot; 57, third limit block.

### DETAILED DESCRIPTION

The technical solutions of the embodiments of the present disclosure will be described in detail in the following in connection with the accompanying drawings, and the described embodiments are only a part of the embodiments of the present disclosure, not all of the embodiments. Based on the embodiments in the present disclosure, all other embodiments obtained by those skilled in the art without creative labor are within the scope of the present disclosure.

In the description of the present disclosure, it is to be noted that, unless otherwise expressly provided and limited, the terms "connected", "coupled", "fixed" are to be broadly construed. For example, it may be a fixed connection, a detachable connection, or a one-piece connection; it may be a mechanical connection or an electrical connection; it may be a direct connection or an indirect connection through an intermediate medium; it may be a connection within two elements or an interaction between two elements. To those skilled in the art, the meaning of the above terms in the present disclosure may be understood as appropriate.

In the present disclosure, unless otherwise expressly provided and limited, a first feature being "above" or "under" a second feature may include the first and second features being in direct contact, or the first and second features being in contact not directly but through another feature between them. Furthermore, the first feature being "above", "over" and "on top of' the second feature includes the first feature being directly above and diagonally above the second feature, or simply indicates that the first feature is horizontally higher than the second feature. The first feature being "below", "under", and "beneath" the second feature includes the first feature being directly below and diagonally below the second feature, or simply indicates that the first feature is horizontally lower than the second feature.

Various components or parts of the battery pack of the present embodiments may be designed and manufactured in accordance with standards for use in underwater equipment, such that the battery pack can be applicable to various underwater equipment.

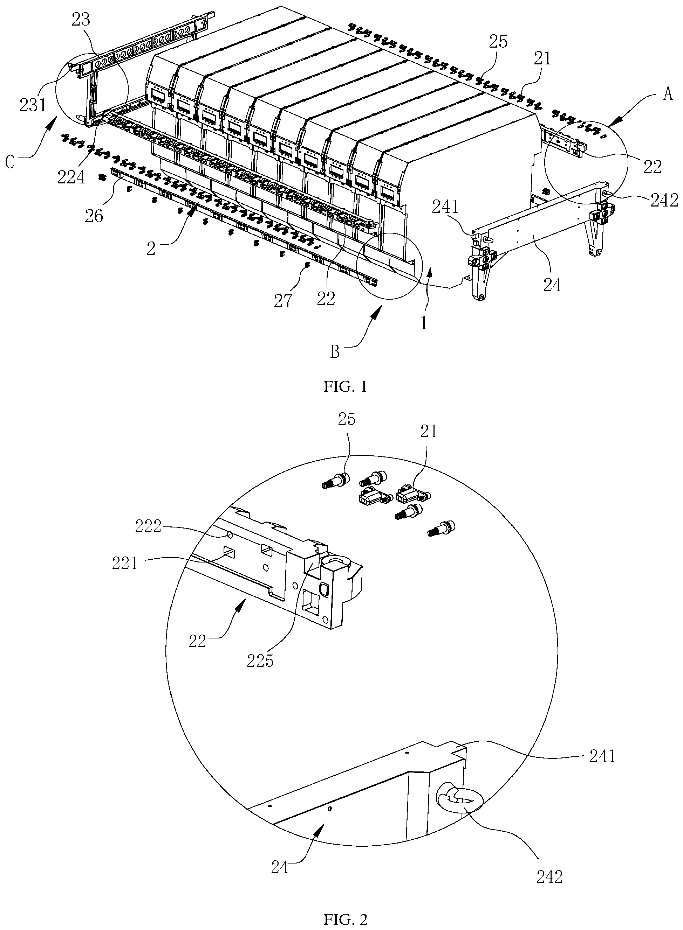

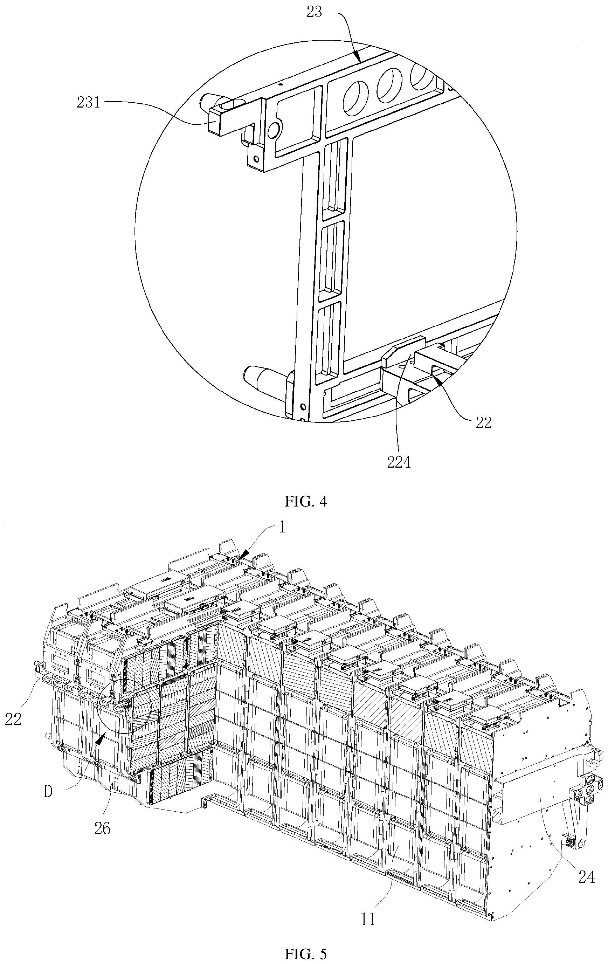

As shown in FIGS. 1, 5, 10 and 12, in the embodiments of the present disclosure, the battery pack includes multiple battery modules 1 and a first fixing assembly 2; the multiple battery modules 1 are connected to form the battery pack through the first fixing assembly 2, and each adjacent two of the multiple battery modules 1 are connected in series through a first connecting piece. Each battery module 1 includes at least one battery unit 11, the at least one battery unit 11 is connected to form the battery module 1 through a second fixing assembly 3, and each adjacent two of the at least one battery unit 11 are electrically connected in series through a second connecting piece. Each battery unit 11 includes at least one single cell 111 connected through a third fixing assembly 4 to form the battery unit 11, and each adjacent two of the at least one single cell 111 are connected in series through a third connecting piece. In this way, the battery pack has a high battery capacity, which may improve the endurance of a device equipped with the battery pack. In the embodiments, the first connecting piece, the second connecting piece, and the third connecting piece are copper rows, which have good electrical conductivity and heat dissipation efficiency and are easier to install than cables. In other embodiments, the first connecting piece, the second connecting piece, and the third connecting piece may be aluminum rows or other alloy connecting pieces.

In the embodiments, the single cell 111 is a square single cell 111, which can store more power compared to a conventional cylindrical battery, and an attachment between the multiple square monobloc batteries 111 is tighter, thereby improving the energy density of the battery pack, reducing the number of monobloc batteries 111 adopted in the battery pack, and thus reducing the manufacturing cost of the battery pack.

In the embodiments, as shown in FIGS. 1, 2, and 11, the first fixing assembly 2 includes multiple socket members 21 and at least two first fixing beams 22; the multiple battery modules 1 form a battery module group, one of the two first fixing beams 22 being disposed on one of opposite sides of the battery module group, and the other of the two first fixing beams 22 being disposed on the other of the opposite sides of the battery module group; an end of one of the two first fixing beams 22 and an end of the other of the two first fixing beams 22 are connected through a first connector 23, the end of the one of the two first fixing beams 22 and the end of the other of the two first fixing beams 22 facing each other; the other end of the one of the two first fixing beams 22 and the other of the other of the two first fixing beams 22 are connected through a second connector 24, the other end of the one of the two first fixing beams 22 and the other end of the other of the two first fixing beams 22 facing each other; each battery module 1 defines a first socket hole 321 on each of the opposite sides of the battery module group, and multiple second socket holes 221 are defined on a corresponding first fixing beam 22, the multiple second socket holes 221 corresponding to the first socket holes 321 one by one; each of the multiple socket members 21 is inserted in a corresponding first socket hole 321 and a corresponding second socket hole 221. The two first fixing beams 22 are arranged on opposite sides of the battery module group, and the ends of the two first fixing beams 22 are respectively connected through the first connector 23 and the second connector 24, such that the two first fixing beams 22, the first connector 23, and the second connector 24 are connected to form a fixing bracket enclosing a periphery of the battery module group, so as to make the connection of the battery module group stable. Each battery module 1 defines the first socket hole 321 and the second socket hole 221 is defined on the first fixing beam 22, and by inserting the socket member 21 in the first socket hole 321 and the second socket hole 221, a socket fixing of the first fixing beam 22 and the battery module 1 may be realized, so as to make the assembly and disassembly efficiency of the battery group higher. In the embodiments, the number of the multiple battery modules 1 is 10, and the 10 battery modules 1 form the battery module group. The battery modules 1 are connected in parallel with each other through copper rows, and the two first fixing beams 22 are arranged on the opposite sides of the battery module group, such that the two first fixing beams 22 fix the battery module group on its front and back. In this way, there is no need for the battery pack to set up a battery box specifically for accommodating the battery modules 1. The first fixing assembly requires less metal material and is lighter in weight than the battery box, and the first fixing beam 22, the first connector 23, and the second connector 24 are made of aluminum alloy, which may reduce the overall weight of the battery pack. In other embodiments, the number of the first fixing beams 22 on each side of the battery module group may be set in a plurality, for example, one first fixing beam 22 is arranged on one side of the battery module group, two first fixing beams 22 are arranged on the other side of the battery module group; or, multiple first fixing beams 22 may be arranged on each side of the battery module group, and the number of the first fixing beams 22 may be set according to actual needs.

In some embodiments, the multiple battery modules 1 are arranged side by side to form the battery module group, the first fixing beams 22 are arranged on opposite sides of the battery module group, and the ends of the first fixing beams 22 are respectively connected through the first connector 23 and the second connector 24, so as to enable the two first fixing beams 22, the first connector 23, and the second connector 24 to be connected to form a fixing bracket enclosing a periphery of the battery module group, so as to make the connection of the battery module group stable. Each battery module 1 defines the first socket hole 321 and the second socket hole 221 is defined on the first fixing beam 22, and by inserting the socket member 21 in the first socket hole 321 and the second socket hole 221, a socket fixing of the first fixing beam 22 and the battery module 1 may be realized, so as to make the assembly and disassembly efficiency of the battery group higher.

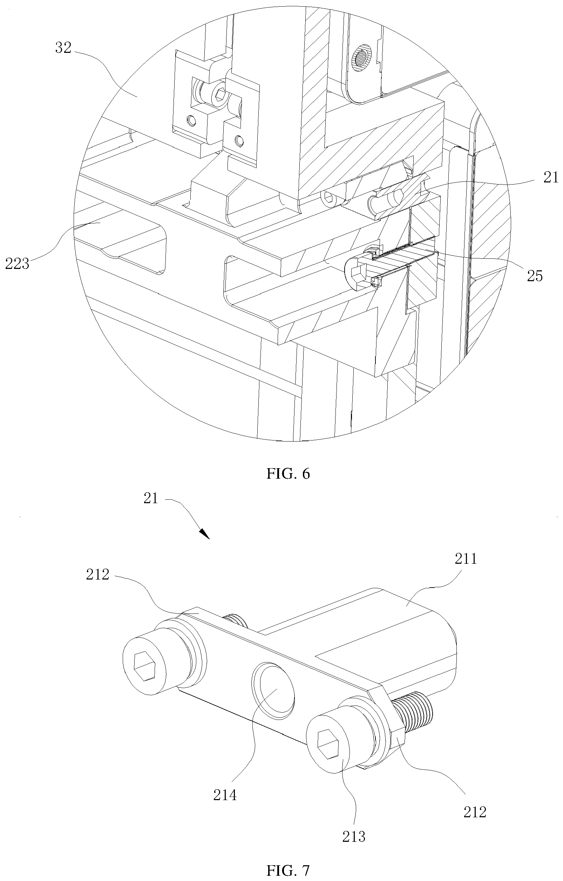

As shown in FIG. 7, each socket member 21 includes a socket body 211, the socket body 211 is arranged in a corresponding first socket hole 321 and a corresponding second socket hole 221; a fixing portion 212 is arranged on each of opposite sides of the socket body 211, and the fixing portion 212 is fixed to a corresponding first fixing beam 22 through a first fastener 213, which improves the fastness of the socket member 21 inside the first socket hole 321 and the second socket hole 221, such that the socket member 21 will not be accidentally loosened during the use of the battery pack. In the embodiments, the socket body 211 and the two fixing portions 212 are in a one-piece structure, which may improve the overall strength of the socket member 21. In addition, a first threaded hole 214 is defined on the socket body 211. When the staff carries out maintenance on the battery pack, the first fixing assembly 2 is required to be disassembled and the battery modules 1 are required to be inspected one by one. During the disassembling process, it is difficult to directly apply force to the socket member 21 because the socket member 21 is inside the first socket hole 321 and the second socket hole 221. By virtue of this design, the staff can screw a threaded rod into the first threaded hole 214, and pull the socket member 21 out of the first socket hole 321 and the second socket hole 221 through the threaded rod, thereby improving the efficiency of disassembling the socket member 21.

In some embodiments, the socket member 21 is a pin, and the pin is made of stainless-steel material, which is strong and not easily damaged.

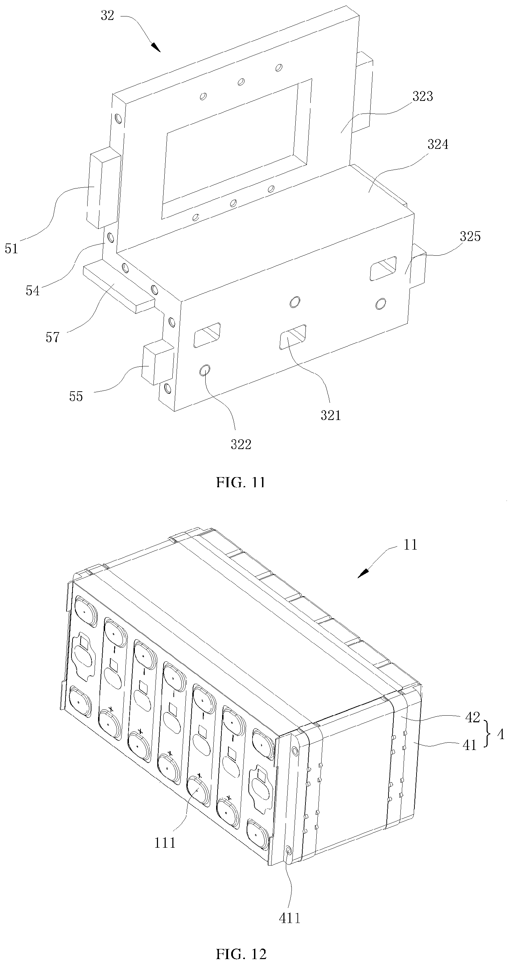

In the embodiments, as shown in FIGS. 2 and 11, each first fixing beam 22 further defines multiple first fixing holes 222, where the first fixing holes 222 are spaced apart from the second socket holes 221. A second fixing hole 322 is defined on each battery module 1 facing a corresponding first fixing hole 222, and a second fastener 25 is inserted within the first fixing hole 222 and the second fixing hole 322 to improve the connection stability between the first fixing beam 22 and the battery module 1. In the embodiments, along a length direction of the first fixing beam 22, each first fixing hole 222 and its adjacent second socket hole 221 are staggered or misaligned, so as to improve the stability of the fixing of the battery module 1 by the first fixing beam 22.

In some embodiments, as shown in FIG. 6, multiple positioning grooves 223 are defined on a side of the first fixing beam 22 away from the battery module 1, and each second socket hole 221 and its first fixing hole 222 are connected to a corresponding positioning groove 223. In this way, when the stuff is installing the socket member 21 or the second fastener 25, he or she may be able to locate the socket members 21 through the positioning grooves 223 for a rapid socket of the socket member 21 into the second socket hole 221 or a rapid screwing of the second fastener 25 into the first fixing hole 222 and the second fixing hole 322, thereby improving the installation efficiency of the socket member 21 and the second fastener 25.

In the embodiments, as shown in FIG. 1, FIG. 2, and FIG. 4, each of both ends of the first connector 23 protrudes to form a first limit block 231, a first limiting groove 224 is defined on an end of the first fixing beam 22 near the first connector 23, and the first limit block 231 is arranged in the first limiting groove 224. A first mounting hole is defined through the first limit block 231, and a second mounting hole is defined on a groove bottom of the first limiting groove 224. A screw is screwed into the first mounting hole and the second mounting hole. Furthermore, a bottom end of the first connector 23 is connected to a second fixing beam 26 through bolts to securely connect the first connector 23 to the first fixing beam 22 and the second fixing beam 26. Each of both ends of the second connector 24 protrudes to form a second limit block 241, a second limiting groove 225 is defined on an end of the first fixing beam 22 near the second connector 24, and the second limit block 241 is arranged in the second limiting groove 225. The second fixing beam 26 is connected to the second connector 24 through a screw, so as to make the connection between the second connector 24 and the first fixing beam 22 as well as the second fixing beam 26 more stable. The above structure may improve the solidity of the battery pack.

A tab 242 is arranged on a side of each of the first connector 23 and the second connector 24 away from the battery module 1. In this way, when the staff handles the battery pack, a pull rope can be threaded into the tab 242 such that the battery pack can be pulled out of a battery compartment through the pull rope, thereby improving the handling efficiency.

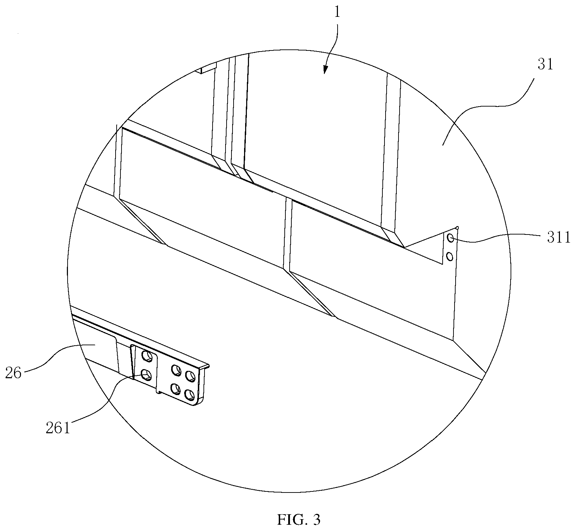

As shown in FIGS. 1, 3, and 5, the first fixing assembly 2 further includes a second fixing beam 26 arranged on each of opposite sides of the battery module group. The second fixing beam 26 is arranged at intervals with the first fixing beam(s) 22 on the same side of the battery module group. Multiple third fixing holes 261 are defined at intervals on the second fixing beam 26, and a fourth fixing hole 311 is defined on each battery module 1 facing a corresponding third fixing hole 261. A third fastener 27 is inserted into the third fixing hole 261 and the fourth fixing hole 311 to improve the connection stability between the respective battery modules 1. In the embodiments, the second fixing beam 26 may be also made of aluminum alloy.

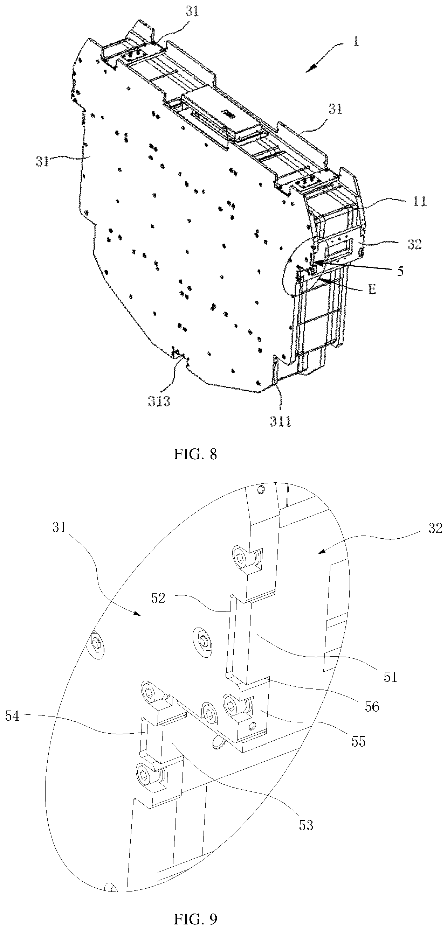

In the embodiments, as shown in FIGS. 8 to 10, the second fixing assembly 3 includes two first clamping plates 31, a fixing plate 32, and screws 36. The at least one battery unit 11 is arranged between the two first clamping plates 31, and the two first clamping plates 31 and the fixing plate 32 are connected through a mortise-and-tenon structure 5 to enable a preliminary connection and fixing between the two first clamping plates 31 and the fixing plate 32, which is simple, easy to install, and requires no other auxiliary tools. Multiple second threaded holes are defined on the two first clamping plates 31 and are spaced apart, and the screws 36 are screwed into the second threaded holes to completely fix the two first clamping plates 31. A body of each screw 36 passes through the third fixing assembly 4, such that the at least one battery unit 11 is fixed between the two first clamping plates 31. In the embodiments, the battery unit 11 can be placed horizontally or vertically according to actual needs, resulting in a more compact structure and higher energy density of the battery module 1. In the embodiments, the first socket hole 321 and the second fixing hole 322 are spaced apart on the fixing plate 32.

In the embodiments, as shown in FIGS. 9 and 11, the fixing plate 32 includes a first plate body 323, a second plate body 324, and a third plate body 325. An end of the second plate body 324 is connected to the first plate body 323, and the other end of the second plate body 324 is connected to the third plate body 325. The first plate body 323 and the third plate body 325 are both disposed perpendicular to the second plate body 324, and the first plate body 323 and the third plate body 325 extend in opposite directions. A first tenon 51 is arranged at each of both ends of the first plate body 323, a second tenon 53 is arranged at each of both ends of the third plate body 325, a third limit block 57 arranged at each of both ends of the second plate body 324, and a third mortise slot 56 is defined between the third limit block 57 and the first tenon 51 on the same side. A first mortise slot 52 is defined on the first clamping plate 31 corresponding to the first tenon 51, and the first tenon 51 is arranged in the first mortise 52; a second mortise slot 52 is defined on the first clamping plate 31 corresponding to the second tenon 53, and the second tenon 53 is arranged in the second mortise slot 54; a third tenon 55 is arranged on the first clamping plate 31 corresponding to the third mortise slot 56, and the third tenon 55 is arranged in the third mortise slot 56. The fixing plate 32 and the two first clamping plates 31 are connected to each other by multiple mortise-and-tenon structures 5 in order to improve the stability of the battery module 1.

In order to increase the stability of the connection between the fixing plate 32 and the first clamping plate 31, multiple third mounting holes are spaced apart on two end surfaces of the fixing plate 32, and fourth mounting holes are defined on the first clamping plate 31 corresponding to the third mounting holes. Bolts are screwed into the third mounting holes and the fourth mounting holes in order to realize the fixed connection between the first clamping plate 31 and the fixing plate 32.

In some embodiments, an insulating paint is sprayed on a surface of the fixing plate 32 to prevent an electric shock from occurring when the stuff contacts the fixing plate 32.

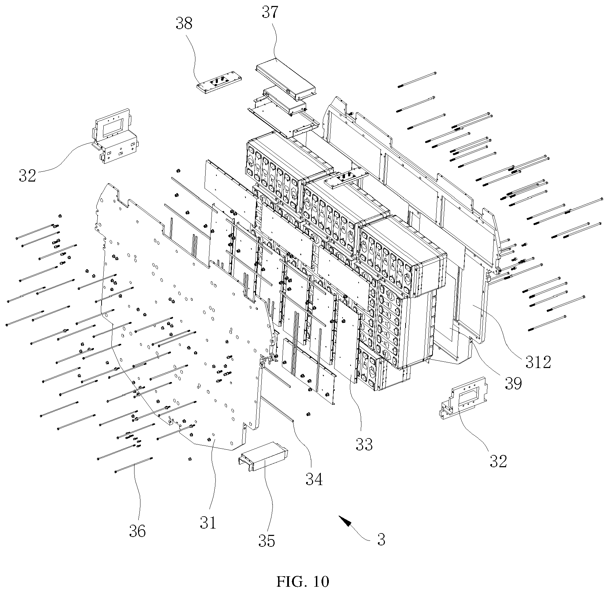

As shown in FIG. 10, multiple mounting grooves 312 are defined on a side of the first clamping plate 31 near the battery unit 11, the mounting grooves 312 are adapted to the battery unit 11, and two ends of the battery unit 11 are arranged in the mounting grooves 312, such that the battery unit 11 can be secured in the mounting grooves 312 and is not easily displaced. In addition, an insulating sheet 39 is arranged between each mounting groove 312 and a corresponding battery unit 11, and the battery unit 11 and the first clamping plate 31 are isolated by the insulating sheet 39 to prevent electrical conduction between the battery unit 11 and the first clamping plate 31.

In some embodiments, the insulating sheet 39 is made of polypropylene material (PP material) with double-sided adhesive backing, which is a thermoplastic synthetic resin with excellent performance, and is a colorless and translucent thermoplastic lightweight general-purpose plastic. Specifically, the PP material has the advantages of chemical resistance, heat resistance, electrical insulation, high strength mechanical properties, and high abrasion-resistance processing properties.

In the embodiments, the second fixing assembly 3 includes an insulating cover 33 facing an electric end of each battery unit 11. The insulating cover 33 is disposed between the battery unit 11 and the first clamping plate 31, and the insulating cover 33 is made of an insulating material, which is capable of insulating the battery unit 11 from the first clamping plate 31, thereby avoiding the first clamping plate 31 and the battery unit 11 from conducting electricity. Two rubber strips 34 are arranged on a side of the insulating cover 33 back away from the battery unit 11, and the two rubber strips 34 are disposed opposite each other on both ends of the insulating cover 33. The rubber strips 34 have elasticity, and the first clamping plate 31 presses the battery unit 11 through the rubber strips 34 to improve the stability of the battery unit 11 within the battery module 1. In the embodiments, the insulating cover 33 is made of an ABS material, which is a terpolymer of three monomers of acrylonitrile, butadiene, and styrene. The ABS material combines the common properties of the three monomers and thus is a rigid material, with easy-to-obtain raw materials, good comprehensive performance, low cost, and wide application scenarios. The rubber strip 34 may be made of polyamino acid material, which has good stability, resilience, and chemical resistance.

In the embodiments, a third limiting groove 313 is defined on a bottom end of the two first clamping plates 31, and a limit plate 35 is arranged in the third limiting groove 313. Both ends of the limit plate 35 are connected to the two first clamping plates 31 to improve the connection stability at the bottom of the battery module 1. Two terminal blocks 38 are arranged on a top end of the two first clamping plates 31, and the two terminal blocks 38 are spaced apart. A voltage picking communication slave 37 and an equalization slave are further arranged between the two terminal blocks 38, and an external device can be electrically connected to the terminal blocks 38 through a wire to enable the battery pack to supply power to the device.

In some embodiments, as shown in FIG. 12, the battery unit 11 includes at least one single cell 111 and a third fixing assembly 4. The third fixing assembly 4 includes a steel strip 42 and at least two second clamping plates 41. The at least one single cell 111 is arranged between the two second clamping plates 41, and the two second clamping plates 41 are connected through the steel strip 42. The steel strip 42 is light in weight, and the use of the steel strip 42 to bind and connect the at least one single cell 111 may reduce the weight of the battery module 1, thereby reducing the weight of the entire battery pack. Further, the above design does not require opening fixing holes on the second clamping plate 41, which may simplify the manufacturing process of the battery unit 11, thereby reducing the production cost. In the embodiments, the second clamping plate 41 defines fifth fixing holes 411, and the screws 36 are threaded into the fifth fixing holes 411 such that the screws 36 can connect and fix the battery unit 11 with the first clamping plate 31.

In some embodiments, multiple limiting portions are arranged on the second clamping plate 41, each limiting portion including two limiting protrusions, and the steel strip 42 may be arranged between the two limiting projections to prevent the steel strip 42 from sliding and detaching from the single cell 111 and losing the bundling function.

In the embodiments, the first clamping plate 31, the second clamping plate 41, the fixing plate 32, and the limit plate 35 may be made of aluminum alloy material, which is lighter in weight and may reduce the overall weight of the battery pack, and the aluminum alloy material is inexpensive and may reduce the production cost of the battery pack.

In other embodiments, the battery unit 11 includes at least one single cell 111 and a fourth fixing assembly, the fourth fixing assembly includes two third clamping plates and two connecting plates, and the at least one single cell 111 is arranged between the two third clamping plates. Two ends of the two third clamping plates that are facing each other are welded and fixed by a corresponding connecting plate, and the other two ends of the two third clamping plates that are facing each other are welded and fixed by the other connecting plate, which may provide a higher connectivity stability of the battery unit. In other embodiments, other connection methods may be adopted between the third clamping plates and the connection plates, such as bolt connection or snap connection, etc., without being limited to the present embodiments.

In order to prevent relative sliding between the single cells 111, a fixing adhesive is arranged between two adjacent single cells 111, such that the connection stability between the single cells 111 is improved.

In the specification herein, it is to be understood that the terms "up", "down", and other orientation or positional relationships are based on the orientation or positional relationships shown in the accompanying drawings, only intended to facilitate the description and simplify the operation, and not intended to indicate or imply that the device or element referred to must have a particular orientation, or be constructed and operated in a particular orientation.

In the specification herein, the description with reference to the term "an embodiment" or the like is intended to refer to at least one embodiment or example of the present disclosure that incorporates the features, structures, materials, or characteristics of the embodiment. In this specification, schematic expressions of the above terms do not necessarily refer to the same embodiment.

Furthermore, it should be understood that although the specification is given in accordance with the embodiments, not each embodiment contains only one independent technical solution, and the specification is recited in such a manner merely for the sake of clarity. Those skilled in the art should take the specification as a whole, and the technical solutions in the various embodiments may be appropriately combined to form other embodiments that can be understood by those skilled in the art.

## Claims

1. A battery pack, comprising: a plurality of battery modules and a first fixing assembly; wherein each adjacent two of the plurality of battery modules are electrically connected through a first connecting piece; the plurality of battery modules form a battery module group; the first fixing assembly comprises a plurality of socket members and a first fixing beam that is disposed on each of opposite sides of the battery module group;
an end of the first fixing beam on one of the opposites sides of the battery module group and an end of the first fixing beam on the other of the opposites sides of the battery module group are connected through a first connector, the end of the first fixing beam on the one of the opposites sides of the battery module group and the end of the first fixing beam on the other of the opposites sides of the battery module group facing each other; the other end of the first fixing beam on the one of the opposites sides of the battery module group and the other end of the first fixing beam on the other of the opposites sides of the battery module group are connected through a second connector, the other end of the first fixing beam on the one of the opposites sides of the battery module group and the other end of the first fixing beam on the other of the opposites sides of the battery module group facing each other; each battery module defines at least one first socket hole, and the first fixing beam defines at least one second socket hole, the at least one second socket hole corresponding to and facing the at least one first socket hole one by one; each of the plurality of socket members is inserted in a corresponding first socket hole and a corresponding second socket hole.

2. The battery pack according to claim 1, wherein each socket member comprises a socket body, and a fixing portion is arranged on each of opposite sides of the socket body; the fixing portion is fixed to a corresponding first fixing beam through a first fastener; the socket body is arranged in a corresponding first socket hole and a corresponding second socket hole on the corresponding first fixing beam.

3. The battery pack according to claim 1, wherein the first fixing beam further defines a plurality of first fixing holes, the plurality of first fixing holes being spaced apart from the at least one second socket hole; a second fixing hole is defined on each battery module facing a corresponding first fixing hole, and a second fastener is inserted within the corresponding first fixing hole and the second fixing hole.

4. The battery pack according to claim 1, wherein each of both ends of the first connector protrudes to form a first limit block; an end of a corresponding first fixing beam near the first connector defines a first limiting groove, and the first limit block is arranged in the first limiting groove.

5. The battery pack according to claim 1 or 4, wherein each of both ends of the second connector protrudes to form a second limit block; an end of a corresponding first fixing beam near the second connector defines a second limiting groove, and the second limit block is arranged in the second limiting groove.

6. The battery pack according to claim 1, wherein the first fixing assembly further comprises a second fixing beam arranged on each of the opposite sides of the battery module group; the second fixing beam is arranged at intervals with a corresponding first fixing beam; a plurality of third fixing holes are defined at intervals on the second fixing beam, and a fourth fixing hole is defined on each battery module corresponding to and facing a corresponding third fixing hole; a third fastener is inserted into the corresponding third fixing hole and the fourth fixing hole.

7. The battery pack according to claim 1, wherein each battery module comprises at least one battery unit and a second fixing assembly; the second fixing assembly comprises two first clamping plates and a fixing plate; the at least one first socket hole is defined on the fixing plate; the at least one battery unit is arranged between the two first clamping plates, and the two first clamping plates and the fixing plate are connected through a mortise-and-tenon structure.

8. The battery pack according to claim 7, wherein a number of the at least one battery unit is plural, and each adjacent two of the at least one battery unit are electrically connected through a second connecting piece; the at least one battery unit is arranged between the two first clamping plates.

9. The battery pack according to claim 8, wherein a plurality of mounting grooves are defined on a side of each of the two first clamping plates near the at least one battery unit; each of the plurality of mounting grooves is adapted to a corresponding battery unit.

10. The battery pack according to claim 8, wherein the second fixing assembly further comprises an insulating cover facing an electric end of each battery unit; the insulating cover is disposed between the battery unit and a corresponding first clamping plate.

11. The battery pack according to claim 8, wherein each battery unit comprises at least one single cell and a third fixing assembly; the third fixing assembly comprises a steel strip and at least two second clamping plates; the at least one single cell is arranged between the at least two second clamping plates, and the at least two second clamping plates are connected through the steel strip.

12. The battery pack according to claim 11, wherein a number of the at least one single cell is plural, and each adjacent two of the at least one single cell are electrically connected through a third connecting piece; the at least one single cell is arranged between the at least two second clamping plates.

13. The battery pack according to claim 11, wherein each single cell is a square single cell.

14. The battery pack according to claim 12, wherein a fixing adhesive is arranged between each adjacent two of the at least one single cell.
